# EUROPÄISCHE PATENTSCHRIFT

(11) **EP 2 005 666 B1**
(45) Veröffentlichungstag und Bekanntmachung des Hinweises auf die Patenterteilung: **25.08.2010**
(21) Anmeldenummer: 07727152.6
(22) Anmeldetag: 21.03.2007
(51) Int. Cl.: H04L 12/56

(54) **Netzzugangssteuerung mit zusätzlicher Verkehrsklasse in einem Kommunikationsnetz**
Network access control using an additional traffic class in a communication network
Commande d'accès réseau avec catégorie de trafic supplémentaire dans un réseau de communication

(30) Priorität: 30.03.2006 DE 102006015239
(43) Veröffentlichungstag der Anmeldung: 24.12.2008
(73) Patentinhaber: Nokia Siemens Networks GmbH & Co. KG, 81541 München (DE)
(72) Erfinder: CHARZINSKI, Joachim, 81825 München (DE); ENGEL, Thomas, 85579 Unterbiberg (DE); GRUBER, Claus, 80336 München (DE); SCHWABE, Thomas, 81827 München (DE)
(74) Vertreter: Fischer, Michael
(86) Internationale Anmeldenummer: PCT/EP2007/052675
(87) Internationale Veröffentlichungsnummer: WO 2007/113109

(56) Entgegenhaltungen:
- WO-A-03/025709
- WO-A-2006/013191
- US-A1- 2003 133 459
- US-B1- 6 744 767

## Beschreibung

Die Erfindung betrifft ein Verfahren, eine Netzsteuerungseinheit und ein Kommunikationsnetz zur Netzzugangssteuerung in einem mit Netzwerkkomponenten gebildeten Kommunikationsnetz.

Eine der gegenwärtig wichtigsten Entwicklungen auf dem Gebiet der Netze ist die Weiterentwicklung von Datennetzen für die Übertragung von Echtzeitverkehr, wie Sprache, Video- oder Audiodaten.

Die am weitesten verbreitete und am meisten benützte Netztechnologie im Bereich der Datennetze beruht auf der Übertragung von Datenpaketen mittels des so genannten IP-Protokolls (Internet Protokolls). Der wichtigste Anwendungsfall dieser Netztechnologie ist das so genannte Internet, eigentlich ein Netzverbund, in dem über miteinander verbundene Netze, welche auch autonome Systeme (von dem Englischen autonomous system) genannt werden, Daten praktisch weltweit ausgetauscht werden können. Herkömmlich waren paketorientierte Netze wie das Internet für die Übertragung von Daten im Rahmen eines so genannten "best effort" vorgesehen, d.h. für eine Datenübertragung ohne die Gewährleistung von Dienstgütemerkmalen. Für die Erweiterung von paketorientierten Netzen im Hinblick auf die Übertragung von Echtzeitverkehr müssen Mechanismen zur Gewährleistung von Dienstgütemerkmalen bereitgestellt werden. Beispielhafte Verfahren für die Gewährleistung von Dienstgütemerkmalen auch nach einem Ausfall von einer Netzwerkkomponente, wie z.B. einem Router, sind in den US-Patentanmeldungen US 2005/0265255 A1 und US 2006/0002297 A1 gegeben.

Ein wichtiger Ansatz zur Gewährleistung von Dienstgütemerkmalen zur Übertragung über paketorientierte Netze ist eine strikte Kontrolle des in das Netz hinein fließenden und wieder heraus fließenden Verkehrs (im Englischen ist auch der

Ausdruck "policing" üblich). Die Zugangskontrolle wird dann häufig noch mit anderen Maßnahmen, beispielsweise zur schnellen Reaktion auf Störfälle erweitert, um die Dienstgüte gewährleisten zu können.

Ein neuerer Ansatz für Zugangskontrollen bei paketorientierten Netzen ist in den internationalen Patentanmeldungen WO 2004/021647 und WO 2004/021648 beschrieben. Dabei werden für durch ein Paketnetz zu routenden Verkehr ein Eintrittsknoten und ein Austrittsknoten bestimmt und, auf diesen Eintritts- und Austrittsknoten bezogen, Zugangskontrollen durchgeführt. Dies kann beispielsweise geschehen, indem der Verkehr der zwischen dem Eingangsknoten und dem Ausgangsknoten fließt, begrenzt wird (WO 2004/021647) oder indem für den bei dem Eingangsknoten eintretenden und für den bei dem Ausgangsknoten austretenden Verkehr separat Kontrollen durchgeführt werden (WO 2004/021648). Durch derartige Zugangskontrollen kann gewährleistet werden, dass innerhalb des Netzes Überlastsituationen vermieden und dadurch verlässliche Aussagen über die Dienstgüte ermöglicht werden. Auf diese Weise lassen sich die einzelnen Netze oder autonomen Systeme eines Netzverbundes für eine Übertragung unter Einhaltung von Dienstgütemerkmalen erweitern- Für eine Übertragung über mehrere Netze hinweg muss dazu noch gewährleistet werden, dass bei der Übertragung zwischen den einzelnen Netzen, die innerhalb der Netze realisierten Dienstgütemerkmale (im Fachjargon spricht man auch von Quality of Service QoS) ebenfalls gewährleistet werden. Dies betrifft einerseits eine Verkehrsbeschränkung zur Vermeidung einer Überlast, andererseits eine Redundanz zum Abfangen von Störungen bzw. Ausfälle.

Eine Möglichkeit, diese Qualitätskriterien bei der Übertragung zwischen Netzen zu erfüllen, ist zwei oder mehrere Links zwischen den verschiedenen Netzen vorzusehen, die gegenseitige Reservelinks oder Backup-Links darstellen, und gleichzeitig den Verkehr so zu dimensionieren, dass bei Normalbetrieb und den verschiedenen Störszenarien keine Überlast auftritt. Beispielhaft kann die amerikanische Patentanmeldung US 2003/133459 A1 genannt werden. Eine derartige Behandlung der Links zwischen verschiedenen Netzen oder Interdomänen-Links erweist sich in der Abstimmung mit der Zugangskontrolle innerhalb der einzelnen Netze (bzw. Intra-Domänen-Zugangskontrolle) als schwierig, weil beide Probleme miteinander gekoppelt sind. Die Bestimmung der Parameter bei der Intra-Domänen-Zugangskontrolle hätte dann nach Maßgabe der Interdomänen-Gegebenheiten zu erfolgen.

Weiterhin besteht in einem paketorientierten Kommunikationsnetz mit Bandbreitenreservierungen für QoS-Verkehr grundsätzlich das Problem, die Reservierung nach einer Änderung der Übertragungsrouten, beispielsweise infolge eines Ausfalls einer Leitung, auf einem neuen Weg wieder einzurichten. In der Zeit zwischen dem Ausfall und der Einrichtung der neuen Reservierungen ist die Dienstgüte für den QoS-Verkehr trotz der vorangehend erläuterten Routinen nicht garantiert, weil der umgeleitete QoS-Verkehr entweder als Best-Effort-Verkehr ohne Priorisierung geführt wird und sich damit die verfügbare Bandbreite mit dem anderen Best-Effort-Verkehr teilen muss oder weiterhin als QoS-Verkehr behandelt, aber am Netzrand wegen der fehlenden Reservierung verworfen wird. In beiden Fällen kann daher die Dienstgüte für reservierte Verkehrsflüsse erheblich leiden.

Der vorliegenden Erfindung liegt daher die Aufgabe zugrunde, ein Verfahren, eine Netzsteuerungseinheit und ein Kommunikationsnetz zur Netzzugangssteuerung in einem aus Netzwerkkomponenten aufgebauten Kommunikationsnetz anzugeben, welche eine Verschlechterung der Dienstgüte aufgrund von nicht zur Verfügung stehenden Netzwerkkomponenten zumindest temporär auffangen.

Diese Aufgabe wird erfindungsgemäss durch ein Verfahren zur Netzzugangssteuerung in einem mit Netzwerkkomponenten gebildeten Kommunikationsnetz gelöst, umfassend die folgenden Schritte:
a) Einführen einer zusätzlichen Verkehrsklasse neben einer nicht-priorisierenden Verkehrsklasse und einer oder mehreren QoS-bietenden Verkehrsklassen;
b) Konfigurieren einer vorbestimmbaren Bandbreite für eine Übertragung von Verkehr in der zusätzlichen Verkehrsklasse;
c) Positionieren der zusätzlichen Verkehrklasse oberhalb der nicht-priorisierenden Verkehrsklasse und unterhalb oder auf gleichem Niveau der QoS-bietenden Verkehrsklassen; und
d) Zulassen der Nutzung der vorbestimmbaren Bandbreite für die Übertragung von Verkehr in der zusätzlichen Verkehrsklasse für eine vorbestimmbare Zeitdauer, wobei der zusätzlichen Verkehrsklasse mittels eines Dual Leaky Bucket Policer eine begrenzte Bandbreite für die vorbestimmbare Zeitdauer zugeordnet wird, indem dessen hochbitratiger Teil auf eine Begrenzung der Bandbreite auf eine erste Bitrate bei geringer Burst-Toleranz und dessen niederbitratiger Teil auf eine zweite Bitrate bei hoher Burst-Toleranz ausgelegt, wobei die erste Bitrate gross gegen die zweite Bitrate ist, und wobei die zusätzliche Verkehrsklasse für Verkehr zur Verfügung gestellt wird, der wegen einer aufgrund eines Ereignisses nicht zur Verfügung stehenden Netzwerkkomponente umgeleitet wird.

Auf diese Weise kann beispielsweise der nach dem Ausfall einer Netzwerkkomponente auftretende "Überlauf"-Verkehr für die Dauer der vorbestimmten Zeitdauer ohne QoS-Einbussen über einen neuen Weg geroutet werden bis eine neue erfolgreiche Reservierung vorliegt. Damit lässt sich eine Inter-Domain-Fehlerreaktion für den QoS-Verkehr deutlich beschleunigen, weil die Bandbreitenreservierungen erst nach einem Re-Routing nachvollzogen werden müssen. Gleichzeitig verhindern die zeitliche Beschränkung und die Bandbreitenbeschränkung einen Missbrauch des Zugangs in diese zusätzliche Verkehrsklasse, wodurch das Verfahren nicht korrumpierbar ist. Fällt also beispielsweise eine Leitung aus, so wird der über die Leitung abgewickelte Verkehr defaultmässig in die zusätzliche Verkehrsklasse umklassifiziert und mit den oben angegebenen Randbedingungen transportiert. Dabei kann die zusätzliche Verkehrsklasse für den Verkehr auch ohne vorherige Reservierung zugänglich gemacht werden, wodurch das Scheduling und das Policing dieses Verkehrs besonders effizient ausgestaltet werden können.

QoS-Einbussen lassen sich bei dem Ausfall einer Netzwerkkomponente sicher vermeiden, wenn der ummarkierte Verkehr mit neuen Reservierungen über das verbleibende Netzwerk transportiert wird. Es ist daher besonders zweckmässig, wenn die Länge der vorbestimmbaren Zeitdauer so ausgelegt wird, dass eine neue Bandbreitenreservierung im Kommunikationsnetz, welches die nicht zur Verfügung stehende Netzwerkkomponente nicht mehr enthält, vornehmbar ist. Zur Bestimmung dieser Zeitdauer kann beispielsweise eine mittlere Zeitdauer angenommen werden, die gewöhnlich für die Berechnung der neuen Admission Control Budgets und Reservierungen erforderlich ist.

Neben einer geeigneten Netzdimensionierung ist es besonders vorteilhaft, wenn die Admission Control Budgets in einer Weise dimensioniert werden, dass die für die Übertragung des Verkehrs in der zusätzlichen Verkehrsklasse benötige Bandbreite berücksichtigt ist. Hierdurch wird es ermöglicht, die gelegentlich benötigte Bandbreite für den Verkehr in zusätzlichen Verkehrsklasse mit genügend grosser Wahrscheinlichkeit zur Verfügung stellen zu können, wodurch gleichzeitig verhindert wird, dass der QoS-Verkehr mit Reservierung die gesamte Bandbreite des Netzes ausbuchen kann.

Um den in der zusätzlichen Verkehrsklasse transportierten Verkehr auch mit Nachbar-Betreibern abrechnen zu können, ist es zweckmässig, den in der zusätzlichen Verkehrsklasse transportierte Verkehr volumenmässig zu erfassen.

In einer weiteren vorteilhaften Ausgestaltung kann anstelle einer Priorisierung der zusätzlichen Verkehrsklasse zwischen QoS-bietenden Verkehrsklassen und nicht-priorisierenden Verkehrsklassen (Best-Effort-Klasse) die zusätzliche Verkehrsklasse mit der QoS-bietenden Verkehrsklasse gleichbehandelt werden, wobei der durchgelassene Verkehr in der zusätzlichen Verkehrsklasse und der im Kommunikationsnetz zugelassene QoS-Verkehr auf die maximal zur Verfügung stehende Übertragungskapazität ausgelegt werden. Gerade mit der Einhaltung dieser Randbedingung können die Dual Leaky Bucket Budgets vergleichsweise optimal für die Erhaltung der Dienstegüte eingestellt werden.

Um auch den nicht-angemeldeten Verkehr mit zufriedenstellender Bandbreite übertragen zu können, ist es vorgesehen, den an einem Netzanschluss des Kommunikationsnetzes anliegenden, nicht angemeldeten Verkehr in der zusätzlichen Verkehrsklasse zu markieren. Ebenso kann alternativ oder auch ergänzend für an einem Netzrand ankommende Datenpakete mit QoS-Markierung, die jedoch keine Reservierung besitzen, eine Ummarkierung in die zusätzliche Verkehrsklasse vorgenommen wird. Diese Ummarkierung kann dabei bereits in einem vorhergehenden Kommunikationsnetz vorgenommen werden, wenn die Datenpakete abseits einer ursprünglich geplanten Route weitergeleitet worden sind.

Der Gegenstand der Erfindung umfasst auch eine Netzsteuerungseinheit mit Mitteln zur Durchführung des erfindungsgemäßen Verfahrens. Eine derartige Netzsteuerungseinheit kann z.B. gegeben sein durch:
- Eine Einrichtung zur Verkehrsbegrenzung/Zugangskontrolle oder Admission-Control-Einheit z.B. einen Beistellrechner, der neben einen Router platziert wird oder eine abgesetzte Ressourcen-Management-Einheit, einen so genannten Bandwidth Broker oder eine Softwarekomponente in einem Router, die nach dem erfindungsgemäßen Verfahren arbeitet.
- Eine Netzmanagement-Einheit oder ein Netzwerk-Kontroll-Server bzw. Network-Control-Server, der die Grenzwerte für die Zugangskontrolle (so genannte Admission Control Budgets) berechnet und/oder in den oben genannten Einheiten konfiguriert.

- Ein Netzplanungstool, das bei der Bestimmung der nötigen Linkkapazitäten für einen gegebenen Verkehr oder des in einem Netz zulässigen Verkehrs das erfindungsgemäße Verfahren verwendet.
- Eine Einheit (z.B. im Netzmanagement oder an anderer Stelle), die die Markierung/Ummarkierung des umgeleiteten Verkehrs in die zusätzliche Verkehrsklasse vornimmt und für dessen Transport die zugebilligte Bandbreite für die vorbestimmte Zeitdauer eingeräumt wird.

Zudem umfasst der Erfindungsgegenstand ein Kommunikationsnetz mit Mitteln zur Durchführung eines erfindungsgemäßen Verfahrens. Ein derartiges Kommunikationsnetz kann insbesondere eine Netzsteuerungseinheit mit Mitteln zur Durchführung eines erfindungsgemäßen Verfahrens umfassen.

Weitere vorteilhafte Ausgestaltungen der Erfindung sind den übrigen Unteransprüche zu entnehmen.

Ausführungsbeispiele der Erfindung werden anhand einer Zeichnung näher erläutert. Dabei zeigen:
- Figur 1: eine schematische Darstellung eines Kommunikations- netzes;
- Figur 2: eine schematische Darstellung der Priorisierung von Verkehrsklassen im Scheduling; und
- Figur 3: eine schematische Darstellung für die Konfiguration eines Dual Leaky Bucket Policers.

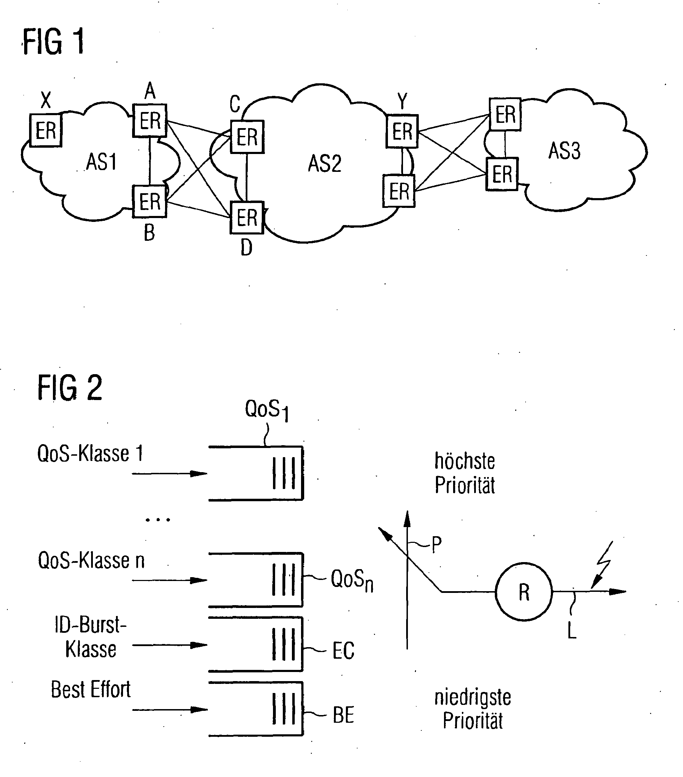

In Figur 1 sind drei Netze bzw. Autonome Systeme AS1, AS2 und AS3 dargestellt. Verkehr kann in diese Netze durch Randknoten ein- und austreten. Exemplarisch sind in den Figuren einige mit ER (ER: Egress Router) bezeichnete Randknoten eingezeichnet. Typischerweise stellt man für die Übertragung zwischen zwei Autonomen Systemen, z.B. AS1 und AS2, Ausfallsicherheit her, indem jeweils zwei Randknoten der Netze verwendet werden und von diesen vier Knoten jeder mit jedem verbunden wird, z.B. A, B, C und D. Wenn jetzt z.B. Verkehr von dem Randknoten bzw. Randpunkt X über das Autonome System AS1 und das Autonome System AS2 zu dem Randpunkt Y übertragen werden soll und von dort in das Autonome System AS3, liefern die Randpunkte A, B, C und D eine ausfallsichere Vernetzung des Interdomain-Übergangs von dem Autonomen System AS1 zu dem Autonomen System AS2. Wenn z.B. der Link zwischen A und C ausfällt, kann der Verkehr, der direkt von A nach C geleitet wurde, nun indirekt über B oder D nach C geleitet werden. Dieser herkömmliche Ansatz bringt jedoch die Schwierigkeit mit sich, dass bei das Netz betreffenden Zulässigkeitsbeschränkungen bzw. Policing eventuelle Störfälle mit berücksichtigt werden sollten. Das heißt, dass z.B. beim Ausfall des Links zwischen A und C der über B umgeleitete Verkehr nicht zu einer Überlast im Punkt B führt. Dieses Problem ist bei Netzen, welcher mit einer Überprüfung der Zulässigkeit arbeiten, welche sich auf Randknoten bzw. Randpunkte beziehen, z.B. X und A bzw. X und B schwierig, aber gemäss der vorliegenden Erfindung nun vergleichsweise einfach zu handhaben.

Hierzu zeigt die Figur 2 in schematischer Darstellung eine beispielhafte Priorisierung von Verkehrsklassen mit Qualityof-Service-Reservierung QoS₁ bis QoSₙ, einer hierunter angeordneten zusätzlichen ID-Burst-Klasse EC und der am wenigsten priorisierten Best-Effort-Klasse BE. Hinsichtlich der Reservierung von Bandbreite für die Übertragung steigt die Priorisierung in der gezeigten Darstellung gemäss einem Pfeil P von unten nach oben, d.h. der mit der Verkehrsklasse QoS₁ markierte Verkehr geniesst die höchste Dienstegüte; entsprechend kann dem mit der Verkehrsklasse BE markierten Verkehr nur noch ein Minimum an Bandbreite zur Verfügung gestellt werden, sofern in den höher priorisierten Verkehrsklasse Verkehr zur Übermittlung mittels eines Routers R ansteht. In der Verkehrsklasse EC kann nun der Verkehr aufgefangen werden, der beispielsweise aktuell über einen spontan ausgefallenen Link L abgewickelt wurde. Die hierfür reservierte Bandbreite geht mit dem Ausfall des Links L schlagartig verloren und würde normalerweise ohne die erfindungsgemässen Vorkehrungen zu einem Verlust der Datenpakete infolge Abbruch der Verbindung führen. Nun greift nach dem oben erläuterten Scheduling eine Policy, bei der der unterbrochene Verkehr beispielsweise von einer der QoS-Klassen in die ID-Burst-Klasse EC ummarkiert und nun mit einer zugesicherten Bandbreite BS für eine maximale Zeitdauer TT übertragen wird.

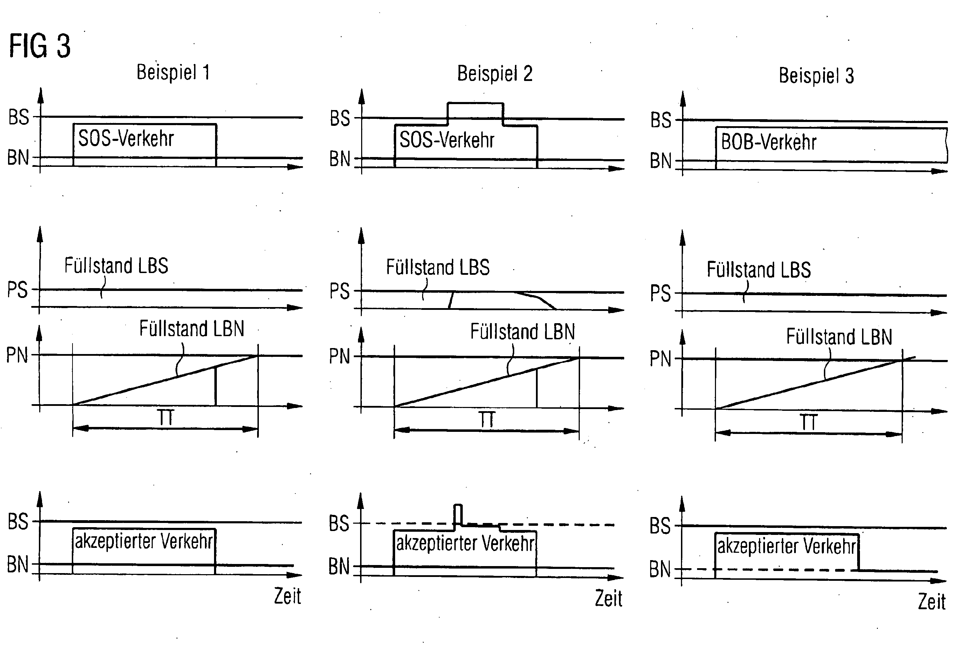

Die Figur 3 zeigt hierzu in schematischer Form die Konfiguration eines Dual Leaky Bucket Policers. Die eingeräumte Rahmenbedingung besteht darin, dass ein Strom von Paketen in der ID-Burst-Klasse EC nur die begrenzte Bandbreite BS und auch diese nur für eine vorbestimmte Zeitdauer TT (Tolerance Time) nutzen kann. Dabei ist die vorbestimmte Zeitdauer TT so ausgelegt, das es während dieser auch Toleranzzeit genannten Zeitdauer TT möglich ist, eine neue Bandbreitenreservierung im betroffenen Netz AS1, AS2 oder AS3 vorzunehmen. So wird im besonderen bei einem Inter-Domain-Übergang der Zugang zu dieser ID-Burst-Klasse auch für von anderen Netzen stammenden Verkehr ohne vorherige Reservierung ermöglicht.

Diese Vorgehensweise soll nachfolgend an drei Beispielen 1 bis 3 erläutert werden. Realisiert ist Dual Leaky Bucket Policer, dessen hochbitratiger Teil LBS auf eine Begrenzung der Bandbreite auf BS bei relativ geringer Burst-Toleranz PS und dessen niederbitratiger Teil LBN auf eine sehr geringe Bitrate BN<<BS bei relativ grosser Burst-Toleranz ausgelegt sind, so dass während der Zeitdauer TT die Übertragung in der ID-Burst-Klasse EC mit der Bandbreite BS ermöglicht ist. Der Dual Leaky Bucket Policer wird dabei als virtuelle Warteschlange verstanden, die bei jedem ankommenden Paket entsprechend gefüllt und mit der für den Policer konfigurierten Bitrate BS, BN wieder geleert wird. Wenn die virtuelle Warteschlange bis zur Grenze (Bucket size) gefüllt ist, werden die noch ankommenden Pakete verworfen.

Im Beispiel 1 zeigt die oberste Abbildung einen in der ID-Burst-Klasse befindlichen "SOS-Verkehr", dessen Bitrate sich zwischen der begrenzten Bitrate BS und der sehr niedrigen Bitrate BN befindet und dessen Zeitdauer kürzer als die vorbestimmte Zeitdauer TT ist. Der Füllstand des hochbitratigen Teils LBS verbleibt daher unterhalb der relativ geringen Burst-Toleranz PS. Der Füllstand des niederbitratigen Teils LBN steigt linear an und fällt mit dem Abklingen des SOS-Verkehrs wieder ab. Die unterste Abbildung zeigt, dass der tatsächlich übermittelte akzeptierte Verkehr dem SOS-Verkehr genau entspricht.

Im Beispiel 2 überschreitet nun die Bitrate des SOS-Verkehrs die Bitrate BS temporär. Die gesamte Zeitdauer des SOS-Verkehrs ist aber immer noch kleiner als die vordefinierte Zeitdauer TT. Für den Füllstand des hochbitratigen Teils LBS bedeutet dies einen starken Anstieg bis zur Burst-Toleranz PS, auf welcher der Verlauf bis zum Abklingen des SOS-Verkehrs unter die Bitrate BS verharrt und erst danach mit der gewählten Bitrate wieder abfällt. Der niederbitratige Teil LBN füllt sich wieder linear auf und fällt ab, wenn der SOS-Verkehr abfällt. Der akzeptierte Verkehr zeigt nun einen erklärungsbedürftigen aber folgerichtigen Verlauf. Mit dem Überschreiten der Bitrate BS des SOS-Verkehrs wird dieser noch übertragen bis die Burst-Toleranz PS beim Füllstand des LBS erreicht ist. Dann wird die Bitrate auf BS zurückgesetzt und ein Teil des SOS-Verkehrs geht hier verloren. Mit dem Unterschreiten der Burst-Toleranz PS wird auch der SOS-Verkehr wieder 1:1 übertragen.

Das Beispiel 3 knüpft nun wieder an das erste Beispiel an, nur dass der SOS-Verkehr eine längere Zeitdauer als die Zeitdauer TT beanspruchen möchte. Während der Zeitdauer TT wird als akzeptierter Verkehr der SOS-Verkehr inhaltsgleich übertragen. Mit dem Ablauf der auch als Toleranzzeit bezeichneten Zeitdauer TT wird aber auch der akzeptierte Verkehr von der hohen Bitrate BS auf die niedrige Bitrate BN abgesenkt. Gelänge es aber nun während der Zeitdauer TT neue Reservierungen ohne den ausgefallenen Link zu berechnen, könnte der hier noch als SOS-Verkehr in der ID-Burst-Klasse markierte Verkehr beispielsweise wieder als regulärer QoS-Verkehr in einer QoS-Klassen QoS, bis QoSₙ abgewickelt werden.

Wie in den Beispielen 1 bis 3 der Figur 3 gezeigt, kann also der nach einem Inter-Domain-Ausfall auftretende umzuleitende Verkehr in der neu geschaffenen ID-Burst-Klasse EC ohne Einbussen des QoS für die Zeitdauer TT übertragen werden, bis eine erfolgreiche neue Reservierungspolitik greift. Die Inter-Domain-Fehlerreaktion für den QoS-Verkehr wird somit deutlich beschleunigt, weil die neue Bandbreitenreservierung erst nach dem Re-Routing eintritt. Gleichzeitig wird durch die zeitliche Beschränkung der Nutzungsdauer und die Bandbreitenbegrenzung der ID-Burst-Klasse EC ein probates Mittel geschaffen, den Verkehr in dieser Klasse in vertretbaren und nicht-missbräulichen Grenzen zu halten.

## Patentansprüche

1. Verfahren zur Netzzugangssteuerung in einem mit Netzwerkkomponenten (A bis D, ER, X, Y) gebildeten Kommunikationsnetz (AS1, AS2, AS3), umfassend die folgenden Schritte:
a) Einführen einer zusätzlichen Verkehrsklasse (EC) neben einer nicht-priorisierenden Verkehrsklasse (BE) und einer oder mehreren QoS-bietenden Verkehrsklassen (QoS₁ bis QoSₙ);
b) Konfigurieren einer vorbestimmbaren Bandbreite (BS, BN) für eine Übertragung von Verkehr in der zusätzlichen Verkehrsklasse (EC) ;
c) Positionieren der zusätzlichen Verkehrklasse (EC) oberhalb der nicht-priorisierenden Verkehrsklasse (BE) und unterhalb oder auf gleichem Niveau der QoS-bietenden Verkehrsklassen (QoS₁ bis QoSₙ); und
d) Zulassen der Nutzung der vorbestimmbaren Bandbreite für die Übertragung von Verkehr in der zusätzlichen Verkehrsklasse (EC) für eine vorbestimmbare Zeitdauer (TT), und **dadurch gekennzeichnet, dass** der zusätzlichen Verkehrsklasse (EC) mittels eines Dual Leaky Bucket Policer eine begrenzte Bandbreite für die vorbestimmbare Zeitdauer (TT) zugeordnet wird, indem dessen hochbitratiger Teil (LBS) auf eine Begrenzung der Bandbreite auf eine erste Bitrate (BS) bei geringer Burst-Toleranz (PS) und dessen niederbitratiger Teil (LBN) auf eine zweite Bitrate (BN) bei hoher Burst-Toleranz (PN) ausgelegt, wobei die erste Bitrate (BS) gross gegen die zweite Bitrate (BN) ist, wobei die zusätzliche Verkehrsklasse (EC) für Verkehr zur Verfügung gestellt wird, der wegen einer aufgrund eines Ereignisses nicht zur Verfügung stehenden Netzwerkkomponente (A bis D, ER, X, Y) umgeleitet wird.

2. Verfahren nach Anspruch 1, **dadurch gekennzeichnet, dass** die zusätzliche Verkehrsklasse (EC) für den Verkehr auch ohne vorherige Reservierung zugänglich gemacht wird.

3. Verfahren nach einem der vorhergehenden Ansprüche, **dadurch gekennzeichnet, dass**
die Länge der vorbestimmbaren Zeitdauer (TT) so ausgelegt wird, dass eine neue Bandbreitenreservierung im Kommunikationsnetz (AS1 bis AS3), welches die nicht zur Verfügung stehende Netzwerkkomponente (A bis D, ER, X, Y) nicht mehr engthält, vornehmbar ist.

4. Verfahren nach einem der vorhergehenden Ansprüche, **dadurch gekennzeichnet, dass**
Admission Control Budgets dimensioniert werden, die die für die Übertragung des Verkehrs in der zusätzlichen Verkehrsklasse (EC) benötige Bandbreite berücksichtigen.

5. Verfahren nach einem der vorhergehenden Ansprüche, **dadurch gekennzeichnet, dass**
der in der zusätzlichen Verkehrsklasse (EC) transportierte Verkehr volumenmässig erfasst wird.

6. Verfahren nach einem der vorhergehenden Ansprüche, **dadurch gekennzeichnet, dass**
die zusätzliche Verkehrsklasse (EC) mit den QoS-bietenden Verkehrsklassen (QoS₁ bis QoSₙ) gleichbehandelt wird, wobei der durchgelassene Verkehr in der zusätzlichen Verkehrsklasse (EC) und der im Kommunikationsnetz zugelassene QoS-Verkehr auf die maximal zur Verfügung stehende Übertragungskapazität ausgelegt werden.

7. verfahren nach einem der vorhergehenden Ansprüche, **dadurch gekennzeichnet, dass**
an einem Netzanschluss (ER) des Kommunikationsnetzes (AS1 bis AS3) nicht angemeldeter Verkehr in der zusätzlichen Verkehrsklasse (EC) markiert wird.

8. Verfahren nach einem der vorhergehenden Ansprüche, **dadurch gekennzeichnet, dass**
für an einem Netzrand ankommende Datenpakete mit QoS-Markierung, die jedoch keine Reservierung besitzen, eine Ummarkierung in die zusätzliche Verkehrsklasse (EC) vorgenommen wird.

9. Verfahren nach einem der vorhergehenden Ansprüche, **dadurch gekennzeichnet, dass**
die Ummarkierung bereits in einem vorhergehenden Kommunikationsnetz vorgenommen wird, wenn die Datenpakete abseits einer ursprünglich geplanten Route weitergeleitet worden sind.

10. Netzsteuerungseinheit mit Mitteln zur Durchführung eines Verfahrens nach einem der Ansprüche 1 bis 9.

11. Kommunikationsnetz mit Mitteln zur Durchführung eines Verfahrens nach einem der Ansprüche 1 bis 9.

## Claims

1. Method for network access control in a communication network (AS1, AS2, AS3) formed with network components (A to D, ER, X, Y), comprising the following steps:
a) introduction of an additional traffic class (EC) to supplement a non-prioritizing traffic class (BE) and one or a plurality of traffic classes (QoS₁ to QoSₙ) offering a QoS;
b) configuration of a predeterminable bandwidth (BS, BN) for the transmission of traffic in the additional traffic class (EC);
c) positioning of the additional traffic class (EC) above the non-prioritizing traffic classes (BE) and below or on the same level as the traffic classes (QoS₁ to QoSₙ) offering a QoS; and
d) authorization of the use of the predeterminable bandwidth for the transmission of traffic in the additional traffic class (EC) for a predeterminable time period (TT) and **characterized in that** the additional traffic class (EC) is allocated a limited bandwidth for the predeterminable time period (TT) by means of a dual leaky bucket policer, **in that** its high-bit-rate part (LBS) is designed for a limitation of the bandwidth to a first bit rate (BS) with low burst tolerance (PS) and its low-bit-rate part (LBN) is designed for a second bit rate (BN) with high burst tolerance (PN), the first bit rate (BS) being large with respect to the second bit rate (BN). the additional traffic class (EC) being provided for traffic which is diverted because of a network component (A to D, ER, X, Y) which is unavailable due to an event.

2. Method according to Claim 1, **characterized in that** the additional traffic class (EC) is also made accessible for the traffic without prior reservation.

3. Method according to one of the preceding claims, **characterized in that** mthe length of the predeterminable time period (TT) is designed in such a manner that a new bandwidth reservation can be carried out in the communication network (AS1 to AS3) which no longer contains the unavailable network component (A to D, ER, X, Y).

4. Method according to one of the preceding claims, **characterized in that** admission control budgets are dimensioned which take into consideration the bandwidth needed for the transmission of the traffic in the additional traffic class (EC).

5. Method according to one of the preceding claims, **characterized in that** the traffic transported in the additional traffic class (EC) is registered by volume.

6. Method according to one of the preceding claims, **characterized in that** the additional traffic class (EC) is treated equally with the traffic class (QoS₁ to QoSₙ) offering QoS, the traffic passed in the additional traffic class (EC) and the QoS traffic authorized in the communication network being designed for the maximum available transmission capacity.

7. Method according to one of the preceding claims, **characterized in that** traffic not registered at a network termination (ER) of the communication network (AS1 to AS3) is marked in the additional traffic class (EC).

8. Method according to one of the preceding claims, **characterized in that** for data packets with QoS marking arriving at a network edge which, however, do not have a reservation, a remarking into the additional traffic class (EC) is carried out.

9. Method according to one of the preceding claims, **characterized in that** the remarking is already carried out in a preceding communication network if the data packets have been forwarded away from an originally planned route.

10. Network control unit having means for carrying out a method according to one of Claims 1 to 9.

11. Communication network having means for carrying out a method according to one of Claims 1 to 9.

## Revendications

1. Procédé pour la commande d'accès réseau dans un réseau de communication (AS1, AS2, AS3) formé de composants de réseau (A à D, ER, X, Y), comprenant les étapes suivantes
a) introduction d'une classe de trafic supplémentaire (EC) en plus d'une classe de trafic non prioritaire (BE) et d'une classe ou de plusieurs classes de trafic offrant une qualité de service (QoS) (QoS, à QoSₙ) ;
b) configuration d'une bande passante pouvant être prédéterminée (BS, BN) pour une transmission de trafic dans la classe de trafic supplémentaire (EC) ;
c) positionnement de la classe de trafic supplémentaire (EC) au-dessus de la classe de trafic non prioritaire (BE) et au-dessous ou au même niveau que les classes de trafic offrant une qualité de service (QoS₁ à QoSₙ) ; et
d) autorisation d'utilisation de la bande passante pouvant être prédéterminée pour la transmission de trafic dans la classe de trafic supplémentaire (EC) pour une période de temps pouvant être prédéterminée (TT),
et **caractérisé en ce qu'**on alloue une bande passante limitée à la classe de trafic supplémentaire (EC) pour la période de temps pouvant être prédéterminée (TT) au moyen d'un surveillant de type Dual Leaky Bucket en concevant sa partie à haut débit binaire (LBS) pour une limitation de la bande passante à un premier débit binaire (BS) en cas de faible tolérance de rafale (PS) et sa partie à bas débit binaire (LBN) pour un second débit binaire (BN) en cas de tolérance de rafale élevée (PN), le premier débit binaire (BS) étant important par rapport au second débit binaire (BN), la classe de trafic supplémentaire (EC) étant mise à disposition pour le trafic qui est détourné à cause d'un composant de réseau (A à D, ER, X, Y) indisponible en raison d'un incident.

2. Procédé selon la revendication 1, **caractérisé en ce que** la classe de trafic supplémentaire (EC) est rendue accessible pour le trafic même sans réservation préalable.

3. Procédé selon l'une des revendications précédentes, **caractérisé en ce que** la longueur de la période de temps pouvant être prédéterminée (TT) est étudiée de manière à ce qu'une nouvelle réservation de bande passante puisse être effectuée dans le réseau de communication (AS1 à AS3) qui ne contient plus le composant de réseau indisponible (A à D, ER, X, Y).

4. Procédé selon l'une des revendications précédentes, **caractérisé en ce que** l'on dimensionne des crédits de contrôle d'accès (*admission control budgets*) qui tiennent compte de la bande passante nécessaire pour la transmission du trafic dans la classe de trafic supplémentaire (EC).

5. Procédé selon l'une des revendications précédentes, **caractérisé en ce que** le trafic transporté dans la classe de trafic supplémentaire (EC) est mesuré en volume.

6. Procédé selon l'une des revendications précédentes, **caractérisé en ce que** la classe de trafic supplémentaire (EC) est traitée à égalité avec les classes de trafic offrant une qualité de service (QoS₁ à QoSₙ), le trafic dont le passage est permis dans la classe de trafic supplémentaire (EC) et le trafic QoS autorisé dans le réseau de communication étant dimensionnés pour la capacité de transmission maximale disponible.

7. Procédé selon l'une des revendications précédentes, **caractérisé en ce que** le trafic non annoncé au niveau d'une connexion de réseau (ER) du réseau de communication (AS1 à AS3) est marqué dans la classe de trafic supplémentaire (EC).

8. Procédé selon l'une des revendications précédentes, **caractérisé en ce que** les paquets de données arrivant au niveau d'une lisière du réseau, mais ne possédant aucune réservation, font l'objet d'un changement de marquage les plaçant dans la classe de trafic supplémentaire (EC).

9. Procédé selon l'une des revendications précédentes, **caractérisé en ce que** le changement de marquage est déjà effectué dans un réseau de communication précédent lorsque les paquets de données ont été transmis à l'écart d'une route initialement planifiée.

10. Unité de commande réseau comprenant des moyens pour l'exécution d'un procédé selon l'une des revendications 1 à 9.

11. Réseau de communication comprenant des moyens pour l'exécution d'un procédé selon l'une des revendications 1 à 9.
